# EUROPEAN PATENT APPLICATION

(11) **EP 4 631 609 A1**
(43) Date of publication of application: **15.10.2025**
(21) Application number: 25169967.4
(22) Date of filing: 11.04.2025
(51) Int. Cl.: B01F 23/2361, B67D 1/00, B01F 33/501, A23L 2/54

(54) **STAND-ALONE CARBONATING DEVICE**

(30) Priority: 12.04.2024 IT 202400008329
(71) Applicant: SMEG S.p.A., 42016 Guastalla (RE) (IT)
(72) Inventor: ROSSI, Federico, 42016 GUASTALLA (RE) (IT); TORREGGIANI, Andrea, 42016 GUASTALLA (RE) (IT)
(74) Representative: Studio Torta S.p.A.

(57) **Abstract**

A carbonating device comprises:
- a discharge nozzle (7);
- one cylinder (6) comprising:
o a chamber (12) provided with an opening (13) and configured to contain carbon dioxide in gaseous form;
o a non-return valve (14) arranged at the opening (13) of the chamber (12) and provided with a plug (15) ;

- a distribution valve (8) configured to selectively feed the gas of the cylinder (6) to the discharge nozzle (7); the distribution valve (8) comprising:
o a valve body (16) selectively coupled to the opening (13) of the chamber (12) of the cylinder (6); the valve body (16) being provided with a seat (20) fluidically connected to the discharge nozzle (7) and the opening (13) of the chamber (12) of the cylinder (6);
o an actuator (18) movable in the seat (20) of the valve body (16) along a valve axis (A) ; the actuator (18) being configured to selectively move the plug (15) of the non-return valve (14) of the cylinder (6) between a closed position, in which the plug (15) prevents gas from flowing through the opening (13), and an open position, in which the plug (15) allows gas to flow through the opening (13) to feed the discharge nozzle (7);

- a drive device (10) configured to control the distribution valve (8) and comprising:
o a knob (28) rotating about a rotation axis (B) arranged transverse to the valve axis (A); and
∘ a transmission device (29) connected to the knob (28) and the actuator (18) and configured to transform the rotary motion of the knob (28) into a translatory motion of the actuator (18) in the seat (20).

## Description

### Cross-reference to related applications

This patent application claims priority from Italian patent application no. 102024000008329 filed on April 12, 2024 the entire disclosure of which is incorporated herein by reference.

### Technical field

The invention relates to a carbonating device configured to make water and beverages carbonated. Preferably, the invention relates to a stand-alone carbonating device for domestic use.

The technical field of reference of the invention relates to domestic carbonating devices, preferably not electrically powered.

### Background

As it is known, carbonating devices for domestic use are mainly used to make tap water or any beverages, for example water-based beverages and fruit juice concentrates, carbonated or effervescent.

The use of tap water reduces the environmental impact of having to transport and bottle sparkling water in bottles.

In recent years, thanks to the increase in consumer sensitivity to environmental impact, the use of carbonating devices has significantly increased.

Most known carbonating devices are provided with a cylinder for carbon dioxide in gaseous form and are configured to feed an adjustable amount of carbon dioxide from the cylinder to a container in which water is already present (generally a bottle).

There are carbonating devices of the type described above on the market that are equipped with electrical operating systems and require an electrical power supply. These carbonating devices, although functional and provided with very advanced control and adjustment systems, are not easily placeable in a domestic environment as they always require an electrical connection. In addition, the need for an electrical power supply and the presence of control systems also have an aesthetic impact in terms of overall dimensions.

Therefore, an object of the invention is to provide a carbonating device, which is not affected by the aforementioned drawbacks of the prior art; in particular, an object of the invention is to provide a mechanically operated carbonating device, which overcomes the aforesaid drawbacks in a simple and economic fashion, both from the functional point of view and from the constructive point of view.

Hence, the invention relates to a carbonating device comprising:
a discharge nozzle;
a cylinder comprising:
   o a chamber provided with an opening and configured to contain carbon dioxide in gaseous form;
   o a non-return valve arranged at the opening of the chamber and provided with a plug;
a distribution valve configured to selectively feed the gas of the cylinder to the discharge nozzle; the distribution valve comprising:
   o a valve body selectively coupled to the opening of the chamber of the cylinder; the valve body being provided with a seat fluidically connected to the discharge nozzle and the opening of the chamber of the cylinder;
   o an actuator movable in the seat of the valve body along a valve axis; the actuator being configured to selectively move the plug of the non-return valve of the cylinder between a closed position, in which the plug prevents gas from flowing through the opening, and an open position, in which the plug allows gas to flow through the opening to feed the discharge nozzle;
a drive device configured to control the distribution valve and comprising:
   o a knob rotating about a rotation axis arranged transverse to the valve axis; and
   o a transmission device connected to the knob and the actuator and configured to transform the rotary motion of the knob into a translatory motion of the actuator in the seat.
Thanks to the structure of the carbonating device according to the invention, users can control the activation of the device through the rotation of the knob, without the need for electrically operated controls. Furthermore, the claimed structure allows for an efficient exploitation of spaces, minimizing the overall dimensions of the carbonating device.

Finally, thanks to the structure of the carbonating device according to the invention, its use by users is simpler than, for example, solutions that involve the use of buttons or levers. With the knob, the movement and the gesture to be carried out to adjust the carbonation are more intuitive (the rotation of the knob is a movement that is normally associated with the "adjustment" action). Furthermore, the knob allows users to perform the rotation movement even with only one hand, without requiring the use of the other hand to hold the carbonating device still (unlike lever systems, which often require the use of the other hand to prevent the carbonating device from becoming unbalanced).

### Brief description of the drawings

Further features and advantages of the invention will be best understood upon perusal of the following description of a non-limiting embodiment thereof, with reference to the accompanying drawings, wherein:
- figure 1 is a perspective side view of the carbonating device according to the invention;
- figure 2 is a perspective view of the carbonating device of figure 1 with parts removed for greater clarity;
- figure 3 is a perspective view, with parts removed for greater clarity, of a first detail of the carbonating device of figure 1;
- figure 4 is a sectional side view of the carbonating device of figure 1 in a first operating position;
- figure 5 is a sectional side view of the carbonating device of figure 1 in a second operating position;
- figure 6 is an enlarged sectional side view of the carbonating device of figure 4 in the first operating position.

### Description of an embodiment of the invention

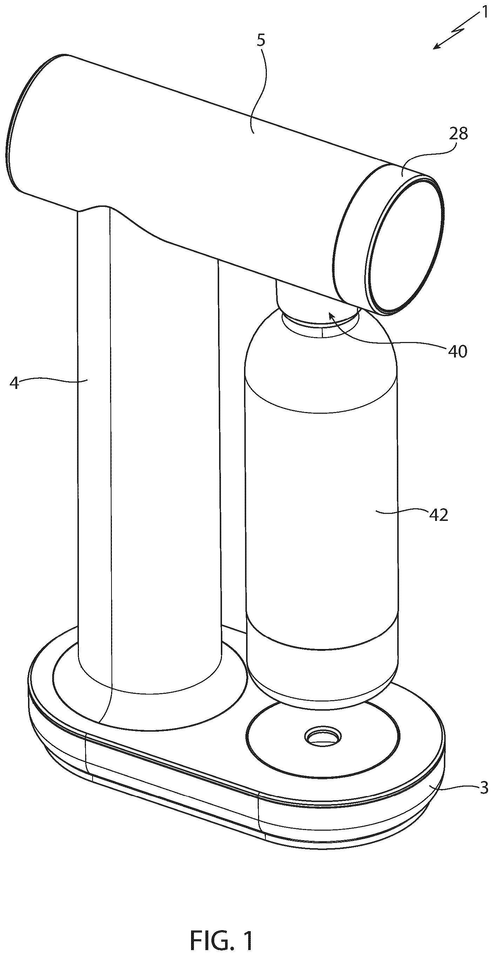

In figure 1, number 1 indicates a carbonating device according to the invention.

The carbonating device 1 comprises a base 3, an upright 4 protruding from the base 3 and a head 5, which protrudes from the upright 4.

The upright 4 is arranged orthogonal to the base 3, whereas the head 5 is arranged orthogonal to the upright 4, preferably at the end of the upright 4 opposite the base 3.

The carbonating device 1 is a stand-alone carbonating device and does not require an electrical power supply.

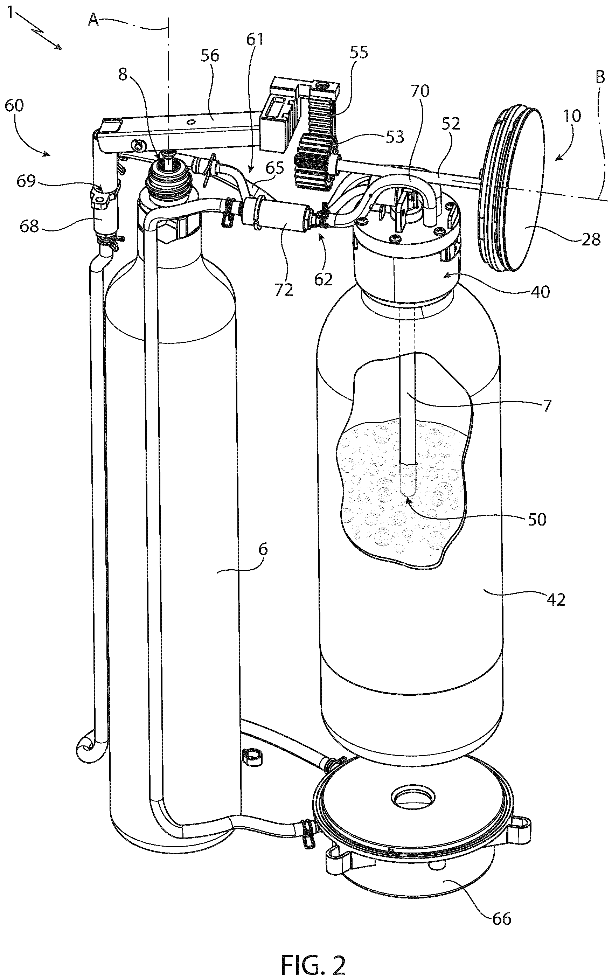

With reference to figures 2-5, the carbonating device 1 comprises a cylinder 6 containing carbon dioxide in gaseous form, a discharge nozzle 7, a distribution valve 8 configured to selectively feed the gas contained in the cylinder 6 to the discharge nozzle 7 and a drive device 10 configured to control the distribution valve 8.

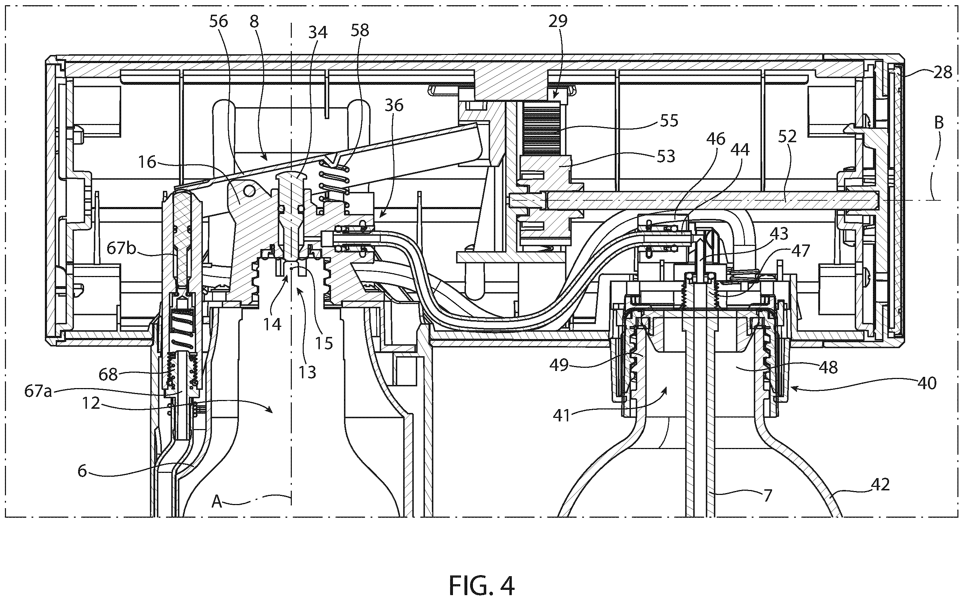

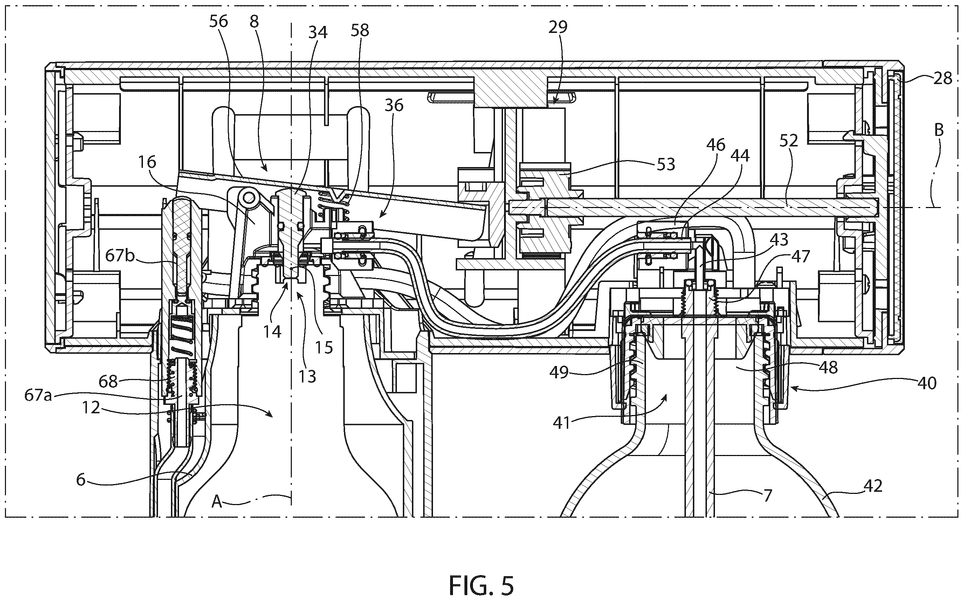

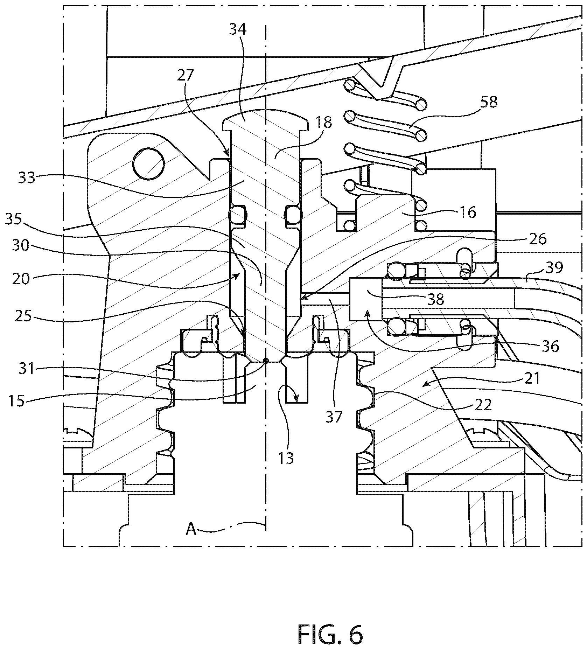

With particular reference to figures 4 and 5, the cylinder 6 comprises a chamber 12, which is provided with an opening 13 and is configured to contain carbon dioxide in gaseous form, and a non-return valve 14, which is arranged at the opening 13 of the chamber 12 and is provided with a movable plug 15. The non-return valve 14 allows the chamber 12 to be filled with gas and prevents gas from flowing out of the chamber 12 unless the plug 15 is deliberately moved so as to allow the gas to flow out. The gas distribution valve 8 comprises a valve body 16, which is selectively coupled to the opening 13 of the chamber 12 of the cylinder 6, and a movable actuator 18. With reference to the detail shown in figure 6, the valve body 16 is provided with a seat 20 fluidically connected to the discharge nozzle 7 and the opening 13 of the chamber 12 of the cylinder 6.

In detail, the valve body 16 is provided with a connector 21, which is configured to be connected to the opening 13 of the chamber 12 of the cylinder 6.

Preferably, the connector 21 is defined by a cylindrical wall 22, which is internally threaded so as to be coupled to a corresponding outer thread arranged in the area of the opening 13 of the chamber 12 of the cylinder 6.

The seat 20 is defined by a substantially cylindrical channel obtained in the valve body 16 and extending along a valve axis A. The seat 20 is provided with:
- an inlet 25 facing the connector 21 so as to be fluidically connected to the opening 13 of the chamber 12 of the cylinder 6 when the cylinder 6 is coupled to the connector 21; the inlet 25 is substantially centred on the valve axis A;
- an outlet 26 arranged along the wall defining the seat 20 in a position preferably substantially proximal to the inlet 25; the outlet preferably extends in a direction orthogonal to the valve axis A;
- a service opening 27 arranged opposite the inlet 25 is configured to allow the movable actuator 18 to be housed in the seat 20.

The actuator 18 is movable in the seat of the valve body 20 along a valve axis A and is configured to selectively move the plug 15 of the non-return valve 14 of the cylinder 6 between a closed position, in which the plug 15 of the non-return valve 14 of the cylinder 6 prevents gas from flowing through the opening 13, and an open position, in which the plug 15 of the non-return valve 14 of the cylinder 6 allows gas to flow through the opening 13 to feed the seat 20 and the discharge nozzle 7.

In particular, the actuator 18 comprises a cylindrical foot 30, which is provided with an end 31 configured to be placed in contact with the plug 15 of the non-return valve 14, and a main body 33, which preferably is cylindrical and is provided with a head 34 having a larger diameter than the main body 33.

Between the main body 33 and the foot 30 there is a connecting portion 35.

The main body 33 has a larger diameter than the foot 30 and the connecting portion 35 is tapered so as to substantially define a connecting portion with the shape of a truncated cone between the foot 30 and the main body 33.

The foot 30 is configured to engage, during use, the inlet 25 of the seat 20 and has a smaller diameter than the diameter of the inlet 25 so as to allow gas to flow through.

The head 34 defines, in use, the limit stop of the movement of the actuator 18 in the seat 20 and cooperates, as discussed more in detail below, with the drive device 10. In figure 4 and figure 6 the actuator 18 is shown in the closed position, while in figure 5 the actuator 18 is in the open position.

In the closed position, the plug 15 of the non-return valve 14 prevents gas from flowing through, while, in the open position, the plug 15 of the non-return valve 14 allows gas to flow through the opening 13. The gas leaving the opening 13 is fed to the outlet 26 going through the inlet 25 and the seat 20.

Downstream of the outlet 26 and upstream of the discharge nozzle 7, the carbonating device 1 comprises a flow rate limiter 36, which is preferably defined by an enlargement of the passage section obtained in the valve body 16 immediately downstream of the outlet 26.

Preferably, the outlet 26 comprises an outlet duct 37 having a first diameter and the flow rate limiter 36 comprises a duct 38 having a larger diameter than the diameter of the outlet duct 37. The discharge nozzle 7 is fluidically connected to the outlet 26 by means of at least one connection duct 39.

In the non-limiting embodiment described and shown herein, the connection duct 39 comprises an end coupled to the flow rate limiter 36. In particular, the end of the connection duct 39 is connected to the duct 38 of the flow rate limiter 36.

With reference to figures 4 and 5, the carbonating device 1 further comprises a connector device 40 configured to be coupled to a mouth 41 of a container 42 for a liquid substance, preferably a bottle.

Preferably, the connector device 40 is defined by a main body 43 provided with a connection channel 44 fluidically connected to the discharge nozzle 7 and the outlet 26. Preferably, the connector device 40 comprises a first connector 46 configured to connect the connection duct 39 to a first end (inlet) of the connection channel 44 obtained in the main body 43 and a second connector 47 configured to connect a second end (outlet) of the connection channel 44 to the discharge nozzle 7.

The main body 43 further comprises a third connector 48 comprising a cylindrical wall 49, which is internally threaded so as to be coupled to a respective outer thread of the container 42 (bottle).

The second connector 47 is arranged so as to face the third connector 48. In other words, the discharge nozzle 7 is surrounded by the cylindrical wall 49 in proximity to the second connector 47. In this way, the discharge nozzle 7 is housed in the container 42 (bottle) when the container 42 is coupled to the third connector 48.

The first connector 44 is preferably configured for an interference or snap coupling to the connection duct 39, the second connector 47 and the third connector 48 are configured for a preferably threaded coupling.

The discharge nozzle 7 preferably comprises a rigid duct provided, at a free end, with an outlet hole 50 having a smaller diameter than the diameter of the rigid duct.

The drive device 10 is configured to control the distribution valve 8 and comprises a knob 28 rotating around a rotation axis B arranged transverse to the valve axis A and a transmission device 29 connected to the knob and the movable actuator and configured to transform the rotary motion of the knob into a translatory motion of the actuator in the seat.

The transmission device 29 is connected to the knob 28 and the actuator 18 and is configured to transform the rotary motion of the knob 28 into a translatory motion of the actuator 18 in the seat 20 along the valve axis A.

The rotation axis B is preferably arranged orthogonal to the valve axis A.

With reference to figures 1 and 2, the cylinder 6 is housed in the upright 4, whereas the transmission device 29 is housed in the head 5 and the knob 28 defines an end of the head 5.

The connector device 40 is located in the head 5, preferably near the end of the head 5 where the knob 28 is located.

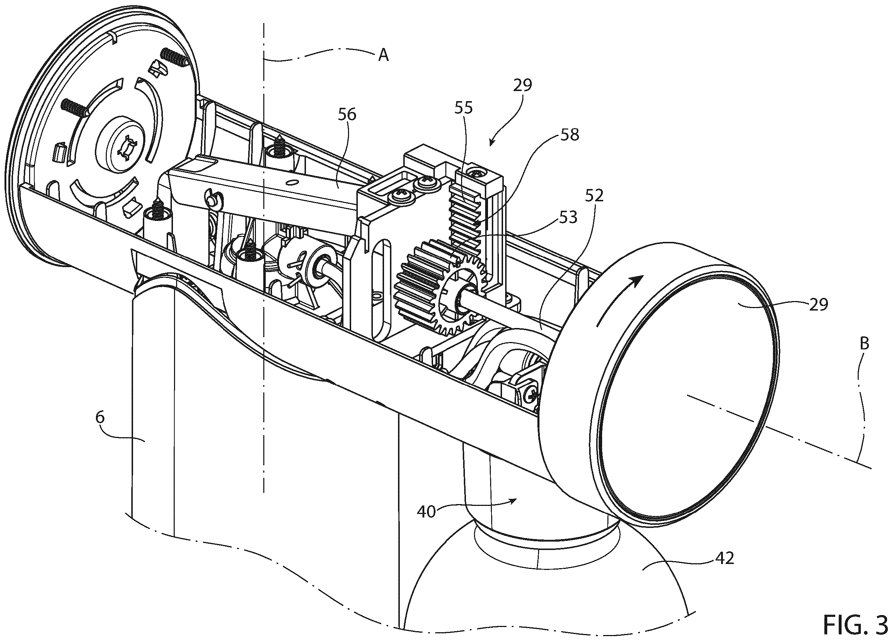

Preferably, the connector device 40 is located in the head 5 so that the container 42 is arranged above the base 3. With reference to figure 2 and figure 3, the transmission device 29 comprises a shaft 52, a gear wheel 53 fixed to the shaft 52, a slide 55 coupled to the gear wheel 53, a lever 56, which is connected to the slide 55 and is configured to move the actuator 18 along the valve axis A. The shaft 52 is provided with an end connected to the knob 28 and with an end fixed to the gear wheel 53. The slide 55 slides along a linear path and has a toothed face 58, which cooperates with the gear wheel 53. Therefore, a rotary movement of the gear wheel 53 corresponds to a linear translation movement of the slide 55. Hence, the slide 55, meshing with the toothed wheel 53, transforms the rotary motion into a linear motion, moving from the top to the bottom simultaneously with the rotation of the gear wheel 53.

With reference to figures 4 and 5, the movement of the slide 55 determines the movement of the lever 56 and, consequently, of the actuator 18. In particular, the lever 56 is hinged to the valve body 16 so as to determine a pressure on the head 34 of the actuator 18 to move the actuator 18 downwards (i.e. towards the plug 15 of the non-return valve 14).

In other words, the lever 56 is hinged to the valve body 16 so that the head 34 of the actuator 18 subtends the arm of the lever 56 extending between the constraint point and the slide 55. Therefore, the head 34 is arranged under the arm of the lever 56 extending between the constraint point and the slide 55.

In use, when the knob 28 rotates in an activation direction (e.g. clockwise, in the non-limiting example shown herein), the slide 55 is lowered, resulting in a downward movement of the actuator 18 until the opening of the non-return valve 14 is obtained (configuration of figure 4).

In order to obtain the opening of the non-return valve 14 of the cylinder 6, the rotation of the knob 28 must be carried out with a predefined angular stroke that is necessary to obtain a respective linear stroke of the actuator 18 such as to determine the opening of the non-return valve 14.

Holding the knob 28 in the limit stop position leads to holding the non-return valve 14 in the open position. The amount of time during which the non-return valve 14 is held in the open position (limit stop position of the knob 28) determines the level of carbonation of the liquid in the container 42. However, it should be borne in mind that, during the rotation of the knob 28, an increasing resistance force is felt due to the increase in the pressure inside the container 42, which leads, as discussed more in detail below, to the opening of a vent valve 68 when the pressure value in the container 42 reaches given values.

The slide 55 is preferably provided with a spring (not visible in the accompanying figures) configured to cause the slide 55 to return to the starting position (position corresponding to the closed non-return valve 14) when it is not subjected to the rotation action imposed by the gear wheel 53 and by the rotation of the knob 28.

Furthermore, there preferably is a spring 58 resting on the valve body 16 and configured to push the lever 56 to the starting position when it is not moved by the slide 55. The spring 58 is configured to exert a pushing action upon the arm of the lever 56 extending between the constraint point and the slide 55.

The spring in the slide 55 and the spring 58 help rotate the knob 28 in the direction contrary to the activation direction until the starting position is reached, when the user does not impose a rotation in the activation direction.

Therefore, when the knob 28 is released, the lever 56 no longer exerts pressure upon the head 34 and the actuator 18 is caused to return to the closed position of the non-return valve 14.

With reference to the schematic representation of figure 2, in order to prevent the container 42 coupled to the carbonating device 1 from exploding in the event of an excessive increase in pressure, a safety circuit 60 is provided comprising a first discharge line 61 and a second discharge line 62.

The first discharge line 61 comprises a first discharge duct 65, which is partly housed in the connector device 40 and is provided with an inlet (not visible) arranged so as to face the volume of the container 42 (preferably arranged so as to face the space within the cylindrical wall of the third connector 44) and an outlet, which discharges into a drip tray 66 housed in the base 3.

A vent valve 68 is located along the first discharge duct 65 and is configured to vent air through a vent outlet 69 when a pressure threshold value is exceeded in the first discharge duct 65 upstream of the vent valve 68.

The pressure threshold value preferably ranges from 0.5Mpa to 0.9Mpa. The outflow of air through the vent outlet 69 produces a discharge sound.

Advantageously, the vent valve 68 is configured to also open due to a mechanical action as well as by overpressure.

With reference to figure 4 and figure 5, the vent valve 68 is provided with a plug 67a movable by pressure difference and a movable stem 67b configured to selectively move the plug 67a independently of the pressure difference.

The vent valve 68 is arranged so that the end of the lever 56 opposite the end coupled to the slide 55 exerts a pressure upon the movable stem 67b when the plug 15 is in the closed position. In other words, the mechanical opening only takes place when the carbonating operation is finished or when the carbonating device is inactive (i.e. when the knob 28 is again in the initial position). In this way, when the carbonation operation has ended, the vent valve 68 opens in order to cause the pressure in the container 42 to go back to zero, thus allowing the container 42 to be safely removed. The spring 58 advantageously facilitates the opening of the vent valve 68 by exerting a pushing action upon the arm of the lever 56.

With reference to figure 2, the second discharge line 62 comprises a second discharge duct 70, which is partly housed in the connector device 40 and is provided with an inlet (not visible) arranged so as to face the volume of the container 42 (preferably arranged so as to face the space within the cylindrical wall of the third connector 44) and an outlet, which discharges into the drip tray 66 housed in the base 3.

A safety valve 72 is located along the second discharge duct 70 and is configured to open when an upstream pressure threshold value (preferably ranging from 1.0Mpa to 1.2Mpa) is exceeded. By so doing, the air pressure inside the container 42 is prevented from being excessive.

Basically, the function of the safety valve 72 is to intervene when the vent valve 68 does not work or is blocked and the pressure of the air inside the container 42 keeps dangerously increasing.

Both the first discharge line 61 and the second discharge line 62 advantageously discharge into the drip tray 66. In this way, if the container 42 is overfilled with water and the discharge lines 61 and 62 receive water, the excess water is discharged into a drip tray 66.

Preferably, the drip tray 66 is removable so as to allow for an easy emptying thereof.

Finally, it is evident that the device disclosed and shown herein can be subjected to changes and variations, without going beyond the scope of protection of the invention defined in the appended claims.

## Claims

1. Carbonating device comprising:
- a discharge nozzle (7);
- one cylinder (6) comprising:
o a chamber (12) provided with an opening (13) and configured to contain carbon dioxide in gaseous form;
o a non-return valve (14) arranged at the opening (13) of the chamber (12) and provided with a plug (15);
- a distribution valve (8) configured to selectively feed the gas of the cylinder (6) to the exhaust nozzle (7); the distribution valve (8) comprising:
o a valve body (16) selectively coupled to the opening (13) of the chamber (12) of the cylinder (6); the valve body (16) being provided with a seat (20) fluidically connected to the discharge nozzle (7) and the opening (13) of the chamber (12) of the cylinder (6);
o an actuator (18) movable in the seat (20) of the valve body (16) along a valve axis (A); the actuator (18) being configured to selectively move the plug (15) of the non-return valve (14) of the cylinder (6) between a closed position, in which the plug (15) prevents gas from flowing through the opening (13), and an open position in which the plug (15) allows gas to flow through the opening (13) to feed the discharge nozzle (7);
- a drive device (10) configured to control the distribution valve (8) and comprising:
o a knob (28) rotating about a rotation axis (B) arranged transverse to the valve axis (A); and
∘ a transmission device (29) connected to the knob (28) and the actuator (18) and configured to transform the rotary motion of the knob (28) into a translatory motion of the actuator (18) in the seat (20).

2. Device according to claim 1, comprising a connector device (40) configured for coupling to an inlet (41) of a container (42) of a liquid substance, preferably a bottle; the discharge nozzle (7) being arranged to discharge gas into the container (42) when the container (42) is coupled to the connector device (40).

3. Device according to claim 1 or 2, comprising a flow rate limiter (36) arranged between the seat (20) of the distribution valve (8) and the discharge nozzle (7).

4. Device according to claim 3, wherein the flow rate limiter (36) is realised in the valve body (16).

5. Device according to one of the claims from 2 to 4, wherein the transmission device (29) comprises a shaft (52) coupled to the knob (28), a gear wheel (53) coupled to the shaft (52), a slide (55) coupled to the gear wheel (53), a lever (56) which is connected to the slide (55) and is configured to selectively move the actuator (18) along the valve axis (A).

6. Device according to claim 5, wherein the slide (55) slides along a linear path and has a toothed face (58), which cooperates with the gear wheel (53).

7. Device according to claim 5 or 6, wherein the lever (56) is hinged to the valve body (16) so as to selectively exert a pressure on a head (34) of the actuator (18) to move the actuator (18) along the valve axis (A) so as to move the plug (15) from the closed position to the open position.

8. Device according to claim 7, wherein the lever (56) is hinged to the valve body (16) so that the head (34) of the actuator (18) subtends the arm of the lever (56) extending between the constraint point and the slide (55).

9. A device according to any one of claims 5 to 8, comprising a safety circuit (60) provided with at least one first discharge line (61); the first discharge line (61) comprising a first discharge conduit (65) provided with an inlet facing the container volume (42), an outlet and a vent valve (68); the vent valve (68) being configured to vent air through a vent outlet (69) when a pressure threshold value is exceeded in the first exhaust duct (65) upstream of the vent valve (68).

10. Device according to claim 9, wherein the vent valve (68) is provided with a plug (67a) movable by pressure difference and a movable stem (67b), configured to selectively move the plug (67a) independently of the pressure difference; the vent valve (68) being arranged so that the lever (56) exerts pressure on the movable stem (67b) when the plug (15) is in the closed position.

11. Device according to claim 10, wherein the lever (56) is provided with a first end coupled to the slide (55) and a second end configured to selectively exert pressure on the movable stem (67b) of the vent valve (68) to open it.

12. Device according to any one of claims 9 to 11, comprising a drip tray (66); the outlet of the first discharge line (61) being arranged to discharge into the drip tray (66).

13. Device according to claim 12, comprising a base (3) in which the drip tray (66) is housed.

14. Device according to any one of the preceding claims, comprising a base (3), an upright (4) protruding from the base (3), and a head (5) protruding from the upright (4); the upright (4) being arranged orthogonal to the base (3); the head (5) being arranged orthogonal to the upright (4), preferably at the end of the upright (4) opposite the base (3).

15. Device according to claim 14, wherein the cylinder (6) is housed in the upright (4); the transmission device (29) being housed in the head (5) and the knob (28) defining one end of the head (5).
